**Europäisches Patentamt**

**European Patent Office**

**Office européen des brevets**

(19)

(11) Veröffentlichungsnummer : **0 119 988**
**B1**

(12)

# EUROPÄISCHE PATENTSCHRIFT

(45) Veröffentlichungstag der Patentschrift :
09.09.87

(51) Int. Cl.⁴ : **C 02 F 11/12, C 02 F 11/10, C 02 F 9/00**

(21) Anmeldenummer : **84890043.7**

(22) Anmeldetag : **08.03.84**

(54) Verfahren zum Entwässern von Schlämmen und/oder organischen Stoffen.

(30) Priorität : 11.11.83 AT 3984/83
17.03.83 AT 953/83

(43) Veröffentlichungstag der Anmeldung :
26.09.84 Patentblatt 84/39

(45) Bekanntmachung des Hinweises auf die Patenterteilung : 09.09.87 Patentblatt 87/37

(84) Benannte Vertragsstaaten :
CH DE FR IT LI SE

(56) Entgegenhaltungen :
CH-A- 527 130
DE-A- 1 432 874
FR-A- 2 401 989
GB-A- 1 525 451
US-A- 3 697 417
US-A- 4 277 342

(73) Patentinhaber : VOEST-ALPINE Aktiengesellschaft
Friedrichstrasse 4
A-1011 Wien (AT)

(72) Erfinder : Janusch, Alois, Dipl.-Ing.
Theodoraweg 1
A-8706 Leoben (AT)
Erfinder : Hanke, Reinhart, Dipl.-Ing.
Annaberggasse 2
A-8700 Leoben (AT)

(74) Vertreter : Haffner, Thomas M., Dr. et al
Patentanwaltskanzlei Dipl.-Ing. Adolf Kretschmer Dr.
Thomas M. Haffner Schottengasse 3a
A-1014 Wien (AT)

EP 0 119 988 B1

## Beschreibung

Die Erfindung bezieht sich auf ein Verfahren zum Entwässern von Schlämmen und/oder organischen Stoffen, insbesondere kommunalen Abwasserschlämmen durch Pressung und/oder Zentrifugieren, bei welchem anschließend die entwässerten Schlämme unter sauren Bedingungen bei Einwirkung von Wasserdampf hydrolysiert und sterilisiert werden. Zum Zwecke der Entwässerung von Schlämmen ist es bereits bekannt den Schlamm einem Eindicken zu unterziehen. Es ist weiters bekannt die Entwässerungsleistung von nachgeschalteten Pressen dadurch zu erhöhen, daß die Schlämme einer Flockung unterworfen werden. Die mechanische Entwässerung wird bisher üblicherweise mit Siebband-, Kammerfilterpressen oder Zentrifugen durchgeführt, wobei je nach Art des zu entwässernden Schlammes eine mehr oder minder gute Entwässerungsleistung erzielt werden kann. Zur Erhöhung der Entwässerungsleistung derartiger Pressen wurde bereits vorgeschlagen, die Flockungsbedingungen durch Wahl geeigneter Verweilzeiten für das Anwachsen der Teilchengröße auf die nachfolgende Entwässerungsmaschine abzustimmen. Es ist weiters bekannt, Schlämme für die nachfolgende mechanische Entwässerung im nicht vorentwässerten Zustand thermisch zu konditionieren, wobei zumeist Dampf in den Dünnschlamm eingepreßt wurde. Bei einem derartigen thermischen Konditionieren der Schlämme wurde jedoch darauf geachtet, daß der eingepreßte Dampf keine wesentliche Zersetzung der organischen Substanzen zur Folge hat, da das Entstehen von löslichen organischen Verbindungen eine weitere Abwasserbelastung darstellen würde. Die thermische Behandlung zielte daher bei diesem bekannten Verfahren lediglich darauf ab, die Kolloidstruktur zu verändern, um eine schnellere Abgabe des Haft- und Kapillarwassers zu erzielen.

Ein Verfahren der eingangs genannten Art ist beispielsweise der FR-A-2 401 989 zu entnehmen. Bei diesem bekannten Verfahren werden Abwasserschlämme zuerst durch Zentrifugieren entwässert, anschließend die entwässerten Schlämme unter sauren Bedingungen bei Einwirkung von Wasserdampf hydrolysiert und sterilisiert und schließlich das Hydrolysat einer biologischen Behandlung unterzogen.

Aus der US-A-3 697 417 ist es bekannt, Abwasserschlämme mit Wasserdampf zu behandeln, das erhaltene Produkt in einen Feststoff- und einen Flüssiganteil aufzutrennen und den Flüssiganteil einer biologischen Behandlung zu unterziehen.

Bei derartigen Entwässerungsverfahren wurden bereits gute Werte für den Trockensubstanzgehalt des Preßkuchens erzielt. Nicht berücksichtigt wurden jedoch die häufig, beispielsweise die in Abwasserschlämmen anzutreffenden toxischen Verunreinigungen, insbesondere Schwermetallverunreinigungen, welche bei der Verwertung als bodenverbesserndes Mittel bzw. der Verhaldung nachteilige Folgen verursachen. Ein Verfahren zur Abtrennung von Schwermetallen aus Abwasserschlämmen ist beispielsweise der US-A-4 277 342 zu entnehmen, bei welcher die Abwasserschlämme unter sauren Bedingungen aufgeschlossen werden und die Schwermetalle anschließend aus der Flüssigphase abgetrennt werden.

Die Erfindung zielt nun darauf ab, ein Verfahren der eingangs genannten Art dahingehend weiter zu entwickeln, daß auch hohe Anteile von Schwermetallen mit einfachen Mitteln und ohne übermäßigen Energiebedarf abgetrennt werden können. Zur Lösung dieser Aufgabe besteht die Erfindung im wesentlichen darin, daß der Schlamm nach einem Eindicken, einer Flockung und einer mechanischen Pressung zur Vorentwässerung auf einen Trockensubstanzgehalt von wenigstens 10 %, vorzugsweise wenigstens 15 %, gebracht wird, daß der Schlamm hierauf, gegebenenfalls nach Einstellen auf einen pH-Wert von ⩽ 7 unter Einwirkung von Sattdampf bei 1 bis 40 bar, vorzugsweise 3 bis 30 bar, zentrifugiert, zumindest teilweise hydrolysiert und sterilisiert wird, wobei die Anwendung des Sattdampfes über einen Zeitraum vorgenommen wird, in welchem der Schlamm auf Temperaturen von über 100 °C gebracht und einer thermischen Umsetzung unter Freisetzung von organischen Säuren unterworfen wird. und daß das gekühlte Zentrifugat einschließlich des Kondensates, gegebenenfalls nach Zusatz von Nährstoffen, einer biologischen Behandlung unter Abtrennung der Schwermetalle unterworfen wird, worauf die nach einer neuerlichen Feststoffabtrennung, vorzugsweise durch Flockung und Eindickung verbleibende flüssige Phase ausgebracht und/oder zur Kläranlage rückgeführt wird. Dadurch, daß durch eine Vorentwässerung die Schlämme auf wenigstens 10 %, vorzugsweise wenigstens 15 % Trockensubstanzgehalt gebracht werden, kann in der Folge mit wesentlich geringeren Mengen an Sattdampf auf äußerst wirtschaftliche Weise eine hinreichend hohe Temperatur erreicht werden, welche eine wenigstens teilweise Hydrolyse des Klärschlammes und damit eine Zersetzung ergibt. Der wesentlich verringerte Wassergehalt der in die Zentrifuge einzubringenden Schlämme bringt hiebei den Vorteil, daß dieser Wassergehalt nicht zusätzlich aufgewärmt werden muß, so daß der Energieverbrauch für die Erzielung relativ hoher Temperaturen wesentlich geringer bleibt. Ein weiterer Vorteil der Verwendung von Sattdampf relativ hohen Druckes in Verbindung mit bereits weitgehend vorgetrockneten Schlämmen besteht hiebei darin, daß ein zumindest teilweise hydrolysiertes sowie ein sterilisiertes Produkt erzielt wird, welches in der Folge in beliebiger Weise biologischen Abbauprozessen unterworfen werden kann, ohne daß das eingesetzte biologische Material durch Störreaktionen und verbleibende konkurrierende biologische Prozesse beeinträchtigt wird. Die zumindest teilweise Hydrolyse des Klärschlammes, welche bei den hohen Temperaturen des Sattdampfes auf Grund des gewählten Druckbereiches auftritt, bedingt zwar eine Belastung des aus der Zentrifuge abgeschiedenen Wassers mit organischen Substanzen. Bei diesen organischen Substanzen handelt es sich jedoch teilweise um freigesetzte organische Säuren, wie beispielsweise Huminsäuren, Buttersäure od. dgl. und derartige Säuren können im Zusammenhang mit den im Schlamm enthaltenen Schwermetallen lösliche Salze bilden. Es können somit die Schwermetalle gemeinsam mit den organischen Zersetzungsprodukten und niedermolekularen wasserlöslichen organischen Verbindungen ausgebracht werden und in einfacher Weise aufgearbeitet werden, wohingegen der verbleibende trockene Klärschlamm weitgehend frei von Schwermetallen unmittelbar zur Verwertung als bodenverbesserndes Mittel bzw. einer Verbrennung zugeführt werden kann. Durch die Anwendung der hohen Temperaturen wird eine Hygenisierung des Klärschlammes erreicht und das aus der Zentrifuge ausgebrachte Abwasser kann durch Faulung, gegebenenfalls nach Zugabe schwefelhaltiger Verbindungen unter Verwendung hochspezialisierter Biozönosen für die Methangärung eingesetzt werden. Der aus der Zentrifuge ausgebrachte Feststoff ist gleichfalls thermisch hygenisiert und ist praktisch steril und wird mit einem Trockensubstanzgehalt von 40 bis 90 % erhalten. Bei der Lagerung eines derartigen praktisch sterilen Feststoffes kann jede Geruchsbelästigung vermieden werden.

Die Hydrolysebedingungen innerhalb der Zentrifuge können durch die Aufenthaltszeit und durch den Druck des Sattdampfes, aus welchem sich eine korrespondierende Temperatur des Dampfes ergibt eingestellt werden. Da ein sterilisiertes Substrat aus der Zentrifuge erhalten wird, lassen sich beliebige spezialisierte Mikroben einsetzen und gezielte Fermentationsprozesse durchführen. Aus dem Abwasser lassen sich beispielsweise durch alkoholische Gärung oder Methangärung weitere Nutzstoffe gewinnen. Durch die thermische Behandlung bei relativ hohen Temperaturen ist das Substrat der Fermentation weitgehend aufgeschlossen und ermöglicht damit hohe Umsatzleistungen. Die Fermentation dieses sterilisierten Substrates kann grundsätzlich aerob oder anaerob durchgeführt werden, wobei bei anaerober Fermentation und enem pH-Wert von $\leq 7$ die Schwermetallsalze von Pb, Hg, Cd, As, Zn und Cu in sulfidischer Form ausgefällt werden können. Bei entsprechend höheren pH-Werten kann auch Fe gefällt werden. Gegenüber konventioneller Schlammfaulung ergibt sich im Rahmen des erfindungsgemäßen Verfahrens eine erhebliche Verringerung der in der Fermentation eingesetzten Wassermenge, da ein Großteil des Wassers jedoch noch ohne die Belastung durch die Hydrolyseprodukte bereits vor dem Einbringen in die Zentrifuge abgetrennt wird. Zur Beschleunigung der Sulfidbildung können schwefelhältige Verbindungen zugesetzt werden, wobei im besonderen Natriumsulfid, bzw. $SO_2$ in reduzierender Atmosphäre in Betracht kommt. Bei einer nachfolgenden Methangärung wurden höhere $CH_4$-Gehalte im Gas erzielt und dies konnte auf das große Angebot organischer Säuren im Substrat zurückgeführt werden. Der gebildete Faulschlamm besteht bei anaerober Fermentation aus neugebildeter Biomasse und kolloidalen Schwermetallsulfiden. Bei anaeroben Umsetzungen ist die Bildung neuer Biomasse relativ gering und die Abtrennung von Sulfiden und Biomasse durch Flockung und Sedimentation relativ einfach durchzuführen. Es entstehen somit auch hier hoch konzentrierte und damit leichter zu handhabende Produkte.

Zur Verbesserung der Energiebilanz und insbesondere um die für die Hydrolyse erforderlichen hohen Temperaturen ohne übermäßige Dampfmengen erzielen zu können, wird vorzugsweise der Dickschlamm mit einem Trockensubstanzgehalt von wenigstens 20 bis 30 % in die Zentrifuge eingebracht. Auf diese Weise bleibt die Menge an zu erwärmendem Ballastwasser gering und es kann mit geringen Mengen an Dampf eine entsprechend hohe Temperatur des in der Zentrifuge zu behandelnden Abwasserschlammes erzielt werden.

Je nach Zusammensetzung des Abwasserschlammes haben sich bestimmte Druckbedingungen und damit bestimmte Temperaturen für besonders günstig erwiesen. So ist es im Rahmen des erfindungsgemäßen Verfahrens vorteilhaft, bei der Aufarbeitung von kommunalen Abwasserschlämmen Sattdampf im Druckbereich von 2 bis 10 bar anzuwenden. Die Verweilzeit in der Zentrifuge ist so zu wählen, daß die gewünschte Hydrolyse eintritt und es ist daher im Rahmen des erfindungsgemäßen Verfahrens von Vorteil, die Anwendung des Sattdampfes über einen Zeitraum vorzunehmen, in welchem der Schlamm auf Temperaturen von über 100 °C gebracht und einer thermischen Umsetzung und Hydrolyse unter Freisetzung von organischen Säuren unterworfen wird. Vorzugsweise werden Temperaturen von wenigstens 150 °C im Schlamm erzielt, womit die gewünschte Sterilisierung ebenso wie die gewünschte Hydrolyse mit Sicherheit durchgeführt wird. Für die Erzielung derartiger Temperaturen sind Drücke in der Größenordnung von 5 bis 15 bar ausreichend.

Ein weiterer Vorteil des Temperaturbereiches von 150 bis 210 °C, wie er beispielsweise im Druckbereich von 5 bis 30 bar bei Anwendung von Sattdampf auftritt, besteht darin, daß auch virale Substanzen zerstört werden können. Die Schutzproteine bzw. die DNS-Struktur derartiger viraler Substanzen läßt sich unter Einwirkung derartiger hoher Temperaturen weitgehend denaturieren und die pathologische Wirksamkeit hiebei zerstören. Im Rahmen des erfindungsgemäßen Verfahrens ist es häufig nicht erforderlich, Schwefelverbindungen zuzusetzen, da der Abwasserschlamm bereits einen hinreichenden Schwefelgehalt aufweist. Es kann somit bei vielen Schlämmen ohne weiteres Einbringen von das Abwasser belastenden Substanzen unmittelbar mit den im Abwasser enthaltenen Verunreinigungen eine vollständige Abscheidung der Schwermetalle erzielt werden.

Bei der Durchführung der erfindungsgemäßen Schlammbehandlung wird in der Regel so vorgegangen, daß Klärschlamm aus einer Abwasserreinigung zunächst einer Eindickung unterworfen wird und bei Erzielung eines Trockensubstanzgehaltes von 2 bis 5 % einer Flockung zugeführt wird. Durch anschließende Pressung, beispielsweise in einer Siebbandpresse, läßt sich ohne weiteres ein Trockensubstanzgehalt von 25 % bis 30 % erzielen. Das Dekantat aus der Eindickung bzw. das Filtrat sowie das Spritzwasser aus der Siebbandpresse können dem Rücklauf zur Kläranlage zugeführt werden. Der weitgehend vorentwässerte Kuchen mit einem Gehalt von etwa 25 % an Trockensubstanz wird in in der Folge in die Zentrifuge eingebracht. In die druckfest abschließbare Zentrifuge wird Saattdampf eingeleitet, wobei das aus der Zentrifuge ausgebrachte Zentrifugat, ebenso wie das Kondensat dieses Sattdampfes einer Weiterbehandlung unterworfen wird. Der ausgebrachte Schlammkuchen ist trocken und weitgehend steril und kann unmittelbar zur Komposterzeugung herangezogen werden.

Bei vollständiger Hydrolyse besteht der verbleibende Feststtoffanteil aus geringen Mengen organischer Substanzen und kann problemlos verhaldet werden.

Das Zentrifugat und das Kondensat ist gleichfalls weitgehend steril und enthält die Schwermetallsalze. Sofern der Schwefelgehalt zu gering ist, kann vor der nachfolgenden Faulung ein Zusatz von Schwefelverbindungen erfolgen, um eine Fällung der Schwermetallsalze als Sulfide im sauren Milieu zu ermöglichen. Nach der Faulung kann eine Flockung zur Abtrennung dieser Schwermetallsalze zusammmen mit neu gebildeter Biomasse erfolgen. Nach einer Eindickung kann das Dekantat dem Rücklauf zur Kläranlage wiederum zugeführt werden, wohingegen der Dickschlamm zur Weiterbehandlung, Verwertung oder Beseitigung herangezogen werden kann.

## Patentansprüche

1. Verfahren zum Entwässern von Schlämmen und/oder organischen Stoffen, insbesondere kommunalen Abwasserschlämmen durch Pressung und/oder Zentrifugieren, bei welchem anschließend die entwässerten Schlämme unter sauren Bedingungen bei Einwirkung von Wasserdampf hydrolysiert und sterilisiert werden, dadurch gekennzeichnet, daß der Schlamm nach einem Eindicken, einer Flockung einer mechanischen Pressung zur Vorentwässerung auf einen Trockensubstanzgehalt von wenigstens 10 %, vorzugsweise wenigstens 15 %, gebracht wird, daß der Schlamm hierauf gegebenenfalls nach Einstellen auf einen pH-Wert von ≤ 7 unter Einwirkung von Sattdampf bei 1 bis 40 bar, vorzugsweise 3 bis 30bar, zentrifugiert, zumindest teilweise hydrolysiert und sterilisiert wird, wobei die Anwendung des Sattdampfes über einen Zeitraum vorgenommen wird, in welchem der Schlamm auf Temperaturen von über 100 °C gebracht und einer thermischen Umsetzung unter Freisetzung von organischen Säuren unterworfen wird, und daß das gekühlte Zentrifugat einschließlich des Kondensates, gegebenenfalls nach Zusatz von Nährstoffen, einer biologischen Behandlung unter Abtrennung der Schwermetalle unterworfen wird, worauf die nach einer neuerlichen Feststoffabtrennung, vorzugsweise durch Flockung und Eindickung verbleibende flüssige Phase ausgebracht und/oder zur Kläranlage rückgeführt wird.

2. Verfahren nach Anspruch 1, dadurch gekennzeichnet, daß der Schlamm mit einem Trockensubstanzgehalt von wenigstens 20 bis 30 % in die Zentrifuge eingebracht wird.

3. Verfahren nach Anspruch 1 oder 2, dadurch gekennzeichnet, daß bei Aufarbeitung von kommunalen Abwasserschlämmen Sattdampf im Druckbereich von 2 bis 10 bar, angewendet wird.

4. Verfahren nach einem der Ansprüche 1, 2 oder 3, dadurch gekennzeichnet, daß der Schlamm durch den Sattdampf auf Temperaturen von wenigstens 150°C erwärmt wird.

5. Verfahren nach einem der Ansprüche 1 bis 4, dadurch gekennzeichnet, daß die organische Substanz von Klärschlämmen bei Sattdampfdrücken von 15-40 bar, vorzugsweise 20-30 bar, einer vollständigen Hydrolyse unterworfen wird.

## Claims

1. Process for dewatering sludges and/or organic matter, particularly domestic sewage sludges, by pressing and/or centrifuging, in which subsequently the dewatered sludges are hydrolyzed and sterilized under acidic conditions with reaction of steam, characterised in that the sludge, after thickening, flocculation and mechanical pressing as preliminary dewatering, is brought to dry substance contents of at least 10 %, preferably at least 15 %, that thereafter the sludge, optionally after standardizing to pH ≤ 7 with reaction of saturated steam at 1 to 40 bar, peferably 3 to 30 bar, is centrifuged, at least partially hydrolyzed and sterilized, wherein the saturated steam is applied for a duration in which the sludge is brought to a temperature of more than 100 °C and subjected to a thermal reaction with release of organic acids, and that the cooled concentrate as well as the condensate, optionally after adding nutritive substances, are subjected to a biological treatment with separation of heavy metals, whereupon the liquid phase remaining after another separation of solid matter, preferably by flocculation and thickening, is outputted and/or recycled tot the sewage treatment plant.

2. Process as claimed in claim 1, characterised in that the sludge is supplied to the centrifuge having dry substance contents of at least 20 to 30 %.

3. Process as claimed in claim 1 oder 2, characterised in that for the treatment of domestic sewage sludges saturated steam having a pressure in the range of 2 to 10 bar is applied.

4. Process as claimed in claim 1, 2 oder 3, characterised in that the sludge is heated by saturated steam to a temperature of at least 150 °C.

5. Process as claimed in any one of claims 1 to 4, characterised in that the organic matter of sewage sludges is subjected to a complete hydrolysis at a saturated steam pressure of 15-40 bar, preferably 20-30 bar.

**Revendications**

1. Procédé pour la déshumidification de boues et/ou de matières organiques, en particulier de boues des eaux d'égout urbaines, par pressage et/ou centrifugation, dans lequel les boues déshydratées sont ensuites hydrolysées et stérilisées dans des conditions acides sous l'effet de la vapeur d'eau, caractérisé en ce que les boues, après un épaississement, une floculation, un pressage mécanique destiné à une déshumidification préalable, sont portées à un extrait sec d'au moins 10 %, de préférence d'au moins 15 %, que les boues, ensuite, éventuellement après ajustement du pH à une valeur inférieure ou égale à 7, sont centrifugées sous l'effet d'une vapeur d'eau à 1-40 bars, de préférence 3-30 bars, au moins partiellement hydrolysées et stérilisées, l'utilisation de la vapeur saturée étant réalisée sur une période au cours de laquelle les boues sont portées à des températures supérieures à 100 °C et sont soumises à une conversion thermique avec libération d'acides organiques, et que le centrifugat refroidi, avec le condensat, et éventuellement après addition de substances nutritives, est soumis à un traitement biologique avec séparation des métaux lourds, ce après quoi la phase liquide restant après une nouvelle séparation des matières solides, de préférence après floculation et épaississement, est extraite et/ou renvoyée à l'installation de clarification.

2. Procédé selon la revendication 1, caractérisé en ce que les boues sont introduites dans la centrifugeuse avec un extrait sec d'au moins 20 à 30 %.

3. Procédé selon la revendication 1 ou 2, caractérisé en ce que, lors du traitement de boues des eaux d'égout urbaines, on utilise une vapeur d'eau dans l'intervalle de pressions de 2 à 10 bars.

4. Procédé selon l'une quelconque des revendications 1, 2 ou 3, caractérisé en ce que les boues sont chauffées par la vapeur saturée à des températures d'au moins 150 °C.

5. Procédé selon l'une des revendications 1 à 4, caractérisé en ce que la matière organique des boues des eaux d'égout sont soumises, à des pressions de vapeur saturée de 15 à 40 bars, de préférence de 20 à 30 bars, à une hydrolyse complète.